# EUROPÄISCHE PATENTSCHRIFT

(11) **EP 2 256 062 B1**
(45) Veröffentlichungstag und Bekanntmachung des Hinweises auf die Patenterteilung: **18.07.2012**
(21) Anmeldenummer: 10005344.6
(22) Anmeldetag: 21.05.2010
(51) Int. Cl.: B05B 7/26, B23Q 11/10, B05B 12/12

(54) **Vorrichtung und Verfahren zum Schmieren und/oder Kühlen von Werkzeugen**
Method and device for lubricating and/or cooling tools
Dispositif et procédé de lubrification et/ou de refroidissement d'outils

(30) Priorität: 29.05.2009 DE 102009023174
(43) Veröffentlichungstag der Anmeldung: 01.12.2010
(73) Patentinhaber: Aktiebolaget SKF, 415 50 Göteborg (SE)
(72) Erfinder: Domrös, Ralf, 16515 Oranienburg-Lehnitz (DE)
(74) Vertreter: Schonecke, Mitja

(56) Entgegenhaltungen:
- WO-A1-03/070382
- DE-A1-102004 034 689

## Beschreibung

Die vorliegende Erfindung betrifft eine Vorrichtung und ein Verfahren zum Schmieren und/oder Kühlen von Aerosolverbrauchern, mit wenigstens einem Aerosolerzeuger, durch den ein Aerosol aus einer Flüssigkeit und einem Trägergas erzeugbar ist, wobei der Aerosolerzeuger mit dem Aerosolverbraucher durch eine erste Leitung verbunden ist, wobei in der ersten Leitung eine Verzweigung angeordnet ist, durch die der Aerosolerzeuger mit einer zweiten Leitung verbunden ist, so dass Aerosol sowohl in die erste, als auch in die zweite Leitung führbar ist.

Die Erfindung betrifft ferner ein Verfahren zum Schmieren und/oder Kühlen eines Aerosolverbrauchers, bei dem ein Aerosol aus einer Flüssigkeit und einem Trägergas erzeugt und dem Aerosolverbraucher zugeführt wird, wobei in Abhängigkeit des angesehlossenen Aerosolverbraucher ein Anteil des Aerosols abgezweigt und am Aerosolverbraucher vorbei geleitet wird.

Eine derartige Vorrichtung und ein derartiges Verfahren sind beispielsweise aus der DE 103 45 130 A1 bekannt. Bei der dort beschriebenen Vorrichtung werden Luft als Trägergas und Öl als Flüssigkeit zur Erzeugung eines Aerosols mittels einer Injektorvorrichtung verwendet. Das derart erzeugte Aerosol ist mittels einer Druckleitung einem Werkzeug zur Schmierung und/oder Kühlung zuführbar. In der Druckleitung ist ein 3-Wege-Ventil angeordnet. In einer Betriebsstellung des 3-Wege-Ventils ist der Aerosolerzeuger direkt mit dem Werkzeug verbunden. In einer alternativen Betriebsstellung des 3-Wege-Ventils ist die Druckleitung und damit der Aerosolerzeuger mit einer Bypassleitung verbunden, so dass das erzeugte Aerosol einem Auffangbehälter und nicht mehr dem Werkzeug zugeführt wird. Die Verbindung des Aerosolerzeugers mit der Bypassleitung wird dann vorgenommen, wenn das zu kühlende oder zu schmierende Werkzeug gewechselt wird. Es ist vorteilhaft, dass während des Wechsels des Werkzeugs die Aerosolerzeugung weiterbetrieben werden kann. Zudem lässt sich mittels besonderer Ausgestaltung des 3-Wege-Ventils erreichen, dass keine Druckschwankungen beim Werkzeugwechsel auftreten.

Bei der Bereitstellung eines zentralen aerosolerzeugenden Schmiersystems ist es erforderlich, eine möglichst große Anzahl verschiedener Werkzeuge mit einer Schmiereinrichtung versorgen zu können. Dabei schwankt der Aerosolbedarf der Werkzeuge je nach Größe und Auslegung des Werkzeugs beachtlich. Hier kann es insbesondere bei der Versorgung kleiner Werkzeuge, die lediglich geringen Mengen an Aerosol benötigen, dazu kommen, dass der Durchsatz an Aerosol durch das kleine Werkzeug sehr gering ist. Dies wiederum kann zur Folge haben, dass durch den Aerosolerzeuger nicht genug Aerosol bereitstellbar ist, da die Systeme über eine Druckluftleitung verbunden sind und die erzeugte Menge an Aerosol vom Durchsatz an Druckluft abhängt. Dadurch ist die ausreichende Schmierung insbesondere bei kleinen Werkzeugen oftmals nicht sichergestellt. Dies ist insbesondere bei injektorbasierten Systemen der Fall, bei denen die Druckluft durch eine Leitung über ein Ölreservoir geführt wird, so dass Öltröpfchen aus dem Reservoir durch die Druckluft mitgeführt werden. In einem Druckbehälter erfolgt eine Mischung der Öltröpfchen und der Druckluft zu einem Aerosol. Durch die Druckluft wird das Aerosol zum Werkzeug durch die verbindende Druckleitung geführt.

Zur Vermeidung dieses Problems sind sogenannte 2-Kanal-Systeme bekannt. Bei diesen werden Öl und Druckluft über getrennte Leitungen zum Werkzeug geführt und erst im oder kurz vor dem Werkzeug zu Aerosol vermischt. Nachteilig an derartigen Systemen ist der durch die Verwendung mehrerer Kanäle bedingte hohe Materialeinsatz und Installationsaufwand.

Es ist daher Aufgabe der vorliegenden Erfindung, die bekannten Vorrichtungen und Verfahren zur Schmierung und/oder Kühlung von Aerosolverbrauchern derart weiterzubilden, dass auch bei einkanaligen Systemen und dem Einsatz kleiner Werkzeuge ausreichend Aerosol produziert wird.

Diese Aufgabe wird für die eingangs genannte Vorrichtung erfindungsgemäß dadurch gelöst, dass eine Reguliereinheit vorgesehen ist, durch die die Menge des in die zweite Leitung geführten Aerosols regulierbar ist, wobei die Reguliereinheit derart ausgebildet ist, dass die Regulierung in Abhängigkeit des Aerosolbedarfs des Aerosolverbrauchers erfolgt.

Für das bekannte Verfahren wird die Aufgabe erfindungsgemäß dadurch gelöst, dass die Menge des abgezweigten Aerosols in Abhängigkeit des Aerosolbedarfs des Aerosolverbrauchers Festgelegt wird. Dies führt zu einer künstlichen Erhöhung der Menge an produziertem Aerosol im Aerosolerzeuger. Dadurch ist insbesondere bei der Schmierung und/oder Kühlung von Werkzeugen mit nur geringem Bedarf an Aerosol sichergestellt, dass der Aerosolerzeuger stets eine ausreichende Menge an Aerosol erzeugt und somit sein Betrieb fehlerfrei aufrechterhalten werden kann. Im Vergleich zu einem 2-Kanal-System ist es hier nicht erforderlich, zwei Leitungen für Öl und Druckluft getrennt zum Werkzeug zu führen. Die Abzweigung und die zweite Leitung können vergleichsweise nahe am Aerosolerzeuger angeordnet werden. Somit wird die notwendige Anzahl an Zuleitungen vom Aerosolerzeuger zum Aerosolverbraucher, die üblicherweise mehrere Meter betragen kann, auf ein Minimum reduziert. Zudem ist eine Unterversorgung des Werkzeugs mit Kühl- bzw. Schmiermittel durch die ausreichende Produktion des Aerosolerzeugers ausgeschlossen. Die Ausfallsicherheit der Werkzeugmaschine ist insofern erhöht.

In einer vorteilhaften Ausgestaltung der Erfindung ist die Reguliereinheit derart ausgebildet, dass die abgezweigte Aerosolmenge bei geringem Bedarf des Aerosolverbrauchers die Produktion von Aerosol im Aerosolerzeuger sicherstellt. Hierdurch wird die Ausfallsicherheit der Vorrichtung weiter erhöht.

Vorteilhaft ist eine Ausgestaltung der Erfindung derart, dass die Reguliereinheit ein in der zweiten Leitung angeordnetes, steuerbares Drosselelement umfasst, durch das die Menge von in die zweite Leitung abgezweigtem Aerosol regulierbar ist. Durch das Drosselelement lässt sich auf einfache Weise die Menge von abgezweigtem Aerosol dem Verbrauch im Werkzeug anpassen, so dass nur gerade soviel Aerosol im Aerosolerzeuger produziert wird, dass der reibungslose Betrieb und damit die Kühlung des Werkzeugs aufrechterhalten wird.

In einer vorteilhaften Ausgestaltung der Erfindung ist das Drosselelement mit einer Steuereinheit verbunden, die in Abhängigkeit des mit der ersten Leitung verbundenen Aerosolverbrauchers automatisch die Menge des die zweite Leitung durchfließenden Aerosols reguliert. Sobald in der Steuereinheit ein Wechsel eines Werkzeugs eingegeben oder automatisch erfasst wird, wird durch entsprechende Ansteuerung des Drosselelements die Menge des abgezweigten Aerosols automatisch soweit reguliert, dass die Aerosolerzeugung im Aerosolerzeuger aufrechterhalten werden kann und so eine ausreichende Schmierung bzw. Kühlung des Werkzeugs möglich ist.

Vorteilhaft ist eine Ausgestaltung der Erfindung derart, dass die Reguliereinheit ein in der zweiten Leitung angeordnetes Schaltelement aufweist, durch das in einer Betriebsstellung die Zuführung von Aerosol zum Drosselelement unterbrechbar ist. Hierdurch ist es möglich, dass bei Kühlung von Werkzeugen mit ausreichend hohem Aerosolbedarf die Abzweigung von Aerosol vollständig unterbunden werden kann und somit kein überflüssiges Aerosol produziert werden muss. Die Steuerung des Schaltelements kann vorteilhafterweise gleichzeitig mit der Steuerung des Drosselelements in Abhängigkeit des mit der ersten Leitung verbundenen Aerosolverbrauchers automatisch erfolgen.

In einer vorteilhaften Ausgestaltung der Erfindung ist in der ersten Leitung bezüglich der Strömungsrichtung des Aerosols hinter der Verzweigung ein weiteres Schaltelement angeordnet, durch das in einer Betriebsstellung der Strömungsweg zwischen dem Aerosolerzeuger und dem Aerosolverbraucher unterbrechbar ist. Dadurch ist es möglich, den gesamten Strom von Aerosol zeitweise am Aerosolverbraucher vorbei durch die zweite Leitung abzuführen. Dies ist vorteilhaft, wenn bei einem Werkzeugwechsel die Produktion von Aerosol nicht unterbrochen werden soll.

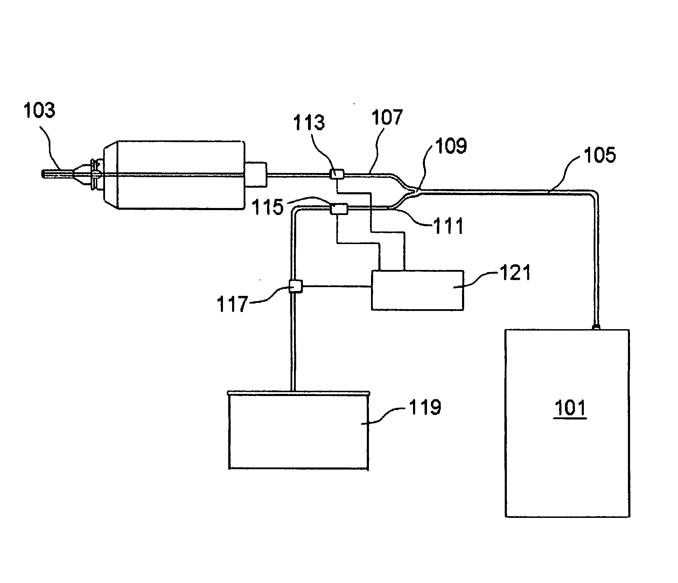

Weitere Vorteile und Ausgestaltungen der Erfindung ergeben sich aus dem nachfolgend beschriebenen Ausführungsbeispiel im Zusammenhang mit der beigefügten Figur.

In der Figur ist eine Aerosolerzeugungseinheit 101 dargestellt. In dieser wird auf bekannte Art und Weise ein Aerosol aus einem Öl unter Verwendung von Druckluft erzeugt. Ein zu kühlendes Werkzeug 103 ist über eine Leitung 105 und eine Leitung 107 mit der Aerosolerzeugungseinheit 101 verbunden. Somit ist Aerosol von der Aerosolerzeugungseinheit 101 über die Leitungen 105 und 107 dem Werkzeug 103 zuführbar. Dadurch kann das Werkzeug 103 geschmiert bzw. gekühlt werden. Das Werkzeug 103 ist austauschbar ausgebildet, so dass verschiedene Werkzeuge 103 wahlweise an die Leitung 107 anschließbar sind. Je nach Ausgestaltung des jeweils an die Leitung 107 angeschlossenen Werkzeugs 103 ändert sich der Bedarf an für die Kühlung bzw. Schmierung notwendigem Aerosol.

Zwischen der Leitung 105 und der Leitung 107 ist ein Y-Stück 109 angeordnet, dieses verbindet die Leitung 105 und 107 mit einer Leitung 111. Durch das Y-Stück 109 ist die Leitung 111 ebenfalls mit der Aerosolerzeugungseinheit 101 verbunden. Aufgrund der Verwendung von Druckluft werden die Leitungen 105, 107 und 111 stets mit unter Druck befindlichem Aerosol beaufschlagt.

In der Leitung 107 ist ein Kugelventil 113 vorgesehen. Durch Schließen des Kugelventils 113 wird die drucktechnische Verbindung des Werkzeugs 103 zur Aerosolerzeugungseinheit 101 unterbrochen, so dass kein Aerosol mehr von der Aerosolerzeugungseinheit 101 zum Werkzeug 103 transportiert wird. Dies ist beispielsweise von Vorteil, wenn das Werkzeug 103 gewechselt werden soll.

In der Leitung 111 sind ein Kugelventil 115 und eine Drossel 117 hintereinander angeordnet. Durch das Kugelventil 115 ist die Leitung 111 ebenfalls für den Durchfluss von Aerosol sperrbar. Durch die Verwendung der steuerbaren Drossel 117 lässt sich zudem der Durchfluss von Aerosol durch die Leitung 111 regulieren. Die Leitung 111 ist endseitig mit einem Reservoir 119 verbunden, in dem sich das Öl aus dem Aerosol abscheidet. Das Reservoir 119 kann beispielsweise mit der Aerosolerzeugereinheit 101 verbunden sein und dieser das gefangene Öl wieder zuführen.

Insbesondere bei geringem Bedarf an Aerosol des Werkzeugs 103 ist es möglich, dass nicht ausreichend Druckluft die Leitungen 105 und 107 bis zum Werkzeug 103 durchströmt, um eine ausreichend Produktion von Aerosol aufrechtzuerhalten. In diesem Fall wird das Kugelventil 115 geöffnet und die steuerbare Drossel 117 entsprechend eingestellt, so dass eine zusätzliche Menge an Aerosol durch die Leitung 111 strömen kann. In der Summe des durch die Leitungen 107 und 111 strömenden Aerosols lässt sich eine ausreichende Aerosolproduktion in der Aerosolerzeugungseinheit 101 sicherstellen. Dadurch ist gewährleistet, dass in der Leitung 107 stets ausreichend Aerosol zur Schmierung bzw. Kühlung des Werkzeugs 103 zur Verfügung steht. Das in die Leitung 111 abgezweigte Aerosol wird nicht zu Schmier- bzw. Kühlzwecken gebraucht und im Reservoir 119 gesammelt.

Bei entsprechender Ausgestaltung des Werkzeugs 103 kann ebenfalls der Fall auftreten, dass durch das Werkzeug 103 ein relativ hoher Bedarf an Aerosol entsteht, so dass die Produktion desselben in der Aerosolerzeugereinheit auch ohne in die Leitung 111 abgezweigtes Aerosol aufrechterhalten werden kann. In diesem Fall wird das Kugelventil 115 geschlossen und die Leitung 111 somit für den Durchfluss von Aerosol gesperrt. In diesem Fall ist es nicht erforderlich, überschüssiges Aerosol zur Aufrechterhaltung der Produktion zu erzeugen und über die Leitung 111 abzuführen.

Die Steuerung der Kugelventile 113 und 115 und der Drossel 117 erfolgt beispielsweise über eine zentrale Steuereinheit 121, mit der sie verbunden sind. Je nach verwendetem Werkzeug 103 sind bei bekannten Schmieranlagen diverse Parameter in der Steuereinheit 121 einzugeben, durch die dann Ventilstellungen gesteuert werden. So kann im vorliegenden Ausführungsbeispiels unter Verwendung der Erfindung sichergestellt werden, dass bei einem Werkzeugwechsel von einem Werkzeug 103 mit großem Bedarf an Aerosol zu einem Werkzeug mit kleinem Bedarf an Aerosol und entsprechender Eingabe der Parameter in die Steuereinheit 121 automatisch das Kugelventil 115 geöffnet wird und so die Leitung 111 für den Durchfluss von zusätzlichem Aerosol, und damit zur Sicherstellung von ausreichender Aerosolproduktion geöffnet wird. Gleichzeitig wird die Drossel 117 durch die Steuereinheit derart angesteuert, dass nicht zu viel überschüssiges Aerosol produziert wird. Die in der Leitung 111 abgezweigte Aerosolmenge ist in Abhängigkeit vom verwendeten Werkzeug 103 gerade so groß, dass mit dem Aerosolbedarf in den beiden Leitungen 107 und 111 eine ausreichende Aerosolproduktion in der Aerosolerzeugungseinheit 101 sichergestellt ist.

Mit der gezeigten Vorrichtung lässt sich bei Schließen des Kugelventils 113 und Öffnen des Kugelventils 115 auch sicherstellen, dass bei Werkzeugwechsel die Aerosolproduktion nicht ausgesetzt werden muss, was insbesondere bei häufigen Werkzeugwechseln von Vorteil ist. Im Fall des geschlossenen Kugelventils 113 fließt das gesamte Aerosol von der Aerosolerzeugungseinheit 101 durch die Leitungen 105 und 111 in das Reservoir 119. Nach dem Werkzeugwechsel wird das Kugelventil 113 wieder geöffnet, so dass Aerosol aus der Aerosolerzeugungseinheit 101 über die Leitungen 105 und 107 am Werkzeug 103 zur Verfügung steht.

Alternativ ist es ebenfalls möglich, über eine entsprechende Dimensionierung der Leitung 111 oder eine auf einen festen Durchlass eingestellte Drossel 117 den Durchfluss der Leitung 111 konstant zu halten und nur über das Kugelventil 115 zuzulassen oder zu unterbinden. In diesem Fall wäre die Durchflussmenge so zu dimensionieren, dass selbst beim Werkzeug 103 mit der kleinsten Durchflussmenge aufgrund des Durchflusses durch die Leitung 111 eine ausreichende Aerosolproduktion gewährleistet ist. Dies erfordert einen geringeren apparativen Aufwand bei gleichzeitig reduzierter Regelung. Allerdings wird sobald das Kugelventil 115 geöffnet ist eine stets gleichgroße Menge Aerosol durch die Leitung 111 geleitet, was je nach eingesetztem Werkzeug 103 ggf. überflüssig wäre.

### Bezugszeichenliste

- 101: Aerosolerzeugungseinheit
- 103: Werkzeug
- 105, 107, 111: Leitungen
- 109: Y-Stück

- 113, 115: Kugelventil
- 117: Drossel
- 119: Reservoir

## Patentansprüche

1. Vorrichtung zum Schmieren und/oder Kühlen von Aerosolverbrauchern, mit wenigstens einem Aerosolerzeuger (101), durch den ein Aerosol aus einer Flüssigkeit und einem Trägergas erzeugbar ist, wobei der Aerosolerzeuger (101) mit dem Aerosolverbraucher durch eine erste Leitung (105) verbunden ist, wobei in der ersten Leitung (105) eine Verzweigung (109) angeordnet ist, durch die der Aerosolerzeuger mit einer zweiten Leitung (111) verbunden ist, so dass Aerosol sowohl in die erste (105), als auch in die zweite Leitung (111) führbar ist, **dadurch gekennzeichnet, dass** eine Reguliereinheit (117) vorgesehen ist, durch das die Menge des in die zweite Leitung (111) geführten Aerosols regulierbar ist, wobei die Reguliereinheit (117) derart ausgebildet ist, dass die Regulierung in Abhängigkeit des Aerosolbedarfs des Aerosolverbrauchers erfolgt.

2. Vorrichtung nach Anspruch 1, bei der die Reguliereinheit (117) derart ausgebildet ist, dass die abgezweigte Aerosolmenge bei geringem Bedarf des Aerosolverbrauchers die Produktion von Aerosol im Aerosolerzeuger (101) sicherstellt.

3. Vorrichtung nach Anspruch 1 oder 2, bei der die Reguliereinheit (117) ein in der zweiten Leitung angeordnetes steuerbares Drosselelement (117) umfasst, durch das die Menge von in die zweite Leitung (107) abgezweigtem Aerosol regulierbar ist.

4. Vorrichtung nach Anspruch 3, bei der das Drosselelement (117) mit einer Steuereinheit verbunden ist, durch die in Abhängigkeit des mit der ersten Leitung (105) verbundenen Aerosolverbrauchers automatisch die Menge des die zweite Leitung (111) durchfließenden Aerosols regulierbar ist.

5. Vorrichtung nach einem der obigen Ansprüche, bei der die Reguliereinheit (117) ein in der zweiten Leitung (111) angeordnetes Schaltelement aufweist, durch das in einer Betriebsstellung die Zuführung von Aerosol zum Drosselelement (117) unterbrechbar ist.

6. Vorrichtung nach Anspruch 5, bei der das Schaltelement mit der Steuereinheit verbunden ist und in Abhängigkeit des mit der ersten Leitung (105) verbundenen Aerosolverbrauchers durch die Steuereinheit automatisch öffenbar bzw. schließbar ist.

7. Vorrichtung nach einem der obigen Ansprüche, bei der in der ersten Leitung (105) bezüglich der Strömungsrichtung des Aerosols hinter der Verzweigung ein Schaltelement angeordnet ist, durch das der Strömungsweg zwischen dem Aerosolerzeuger (101) und dem Aerosolverbraucher unterbrechbar ist.

8. Vorrichtung nach einem der obigen Ansprüche, bei der der Aerosolerzeuger (101) durch die zweite Leitung (111) mit einem Vorratsbehälter (119) für die Flüssigkeit verbunden ist.

9. Vorrichtung nach einem der Ansprüche 5 bis 8, bei der das Schaltelement bzw. die Schaltelemente als Ventile ausgeführt sind.

10. Vorrichtung nach einem der obigen Ansprüche, bei der die Verzweigung (109) als Y-Stück oder T-Stück ausgeführt ist.

11. Verfahren zum Schmieren und/oder Kühlen eines Aerosolverbrauchers, bei dem ein Aerosol aus einer Flüssigkeit und einem Trägergas erzeugt und dem Aerosolverbraucher zugeführt wird, wobei in Abhängigkeit des angeschlossenen Aerosolverbrauchers ein Anteil des Aerosols abgezweigt und am Aerosolverbraucher vorbei geleitet wird, **dadurch gekennzeichnet, dass** die Menge des abgezweigten Aerosols in Abhängigkeit des Aerosolbedarfs des Aerosolverbrauchers festgelegt wird.

12. Verfahren nach Anspruch 11 oder 12, bei dem eine derart große Menge von Aerosol abgezweigt wird, dass eine ausreichende Aerosolversorgung des Aerosolverbrauchers sichergestellt ist.

## Claims

1. Device for lubricating and/or cooling aerosol users, with at least one aerosol producer (101), by means of which an aerosol consisting of a liquid and a carrier gas can be produced, wherein the aerosol producer (101) is connected to the aerosol user by a first line (105), wherein a junction (109), by means of which the aerosol producer is connected to a second line (111), is arranged in the first line (105), and therefore aerosol can be conducted both into the first line (105) and into the second line (111), **characterized in that** a regulating unit (117) is provided and can be used to regulate the quantity of aerosol guided into the second line (111), the regulating unit (117) being designed in such a manner that regulation occurs depending on the aerosol demand of the aerosol user.

2. Device according to Claim 1, in which the regulating unit (117) is designed in such a manner that, in the event of low demand of the aerosol user, the branched-off quantity of aerosol ensures the production of aerosol in the aerosol producer (101).

3. Device according to Claim 1 or 2, in which the regulating unit (117) comprises a controllable throttle element (117) which is arranged in the second line and by means of which the quantity of aerosol branched off into the second line (107) can be regulated.

4. Device according to Claim 3, in which the throttle element (117) is connected to a control unit, by means of which, depending on the aerosol user connected to the first line (105), the quantity of aerosol flowing through the second line (111) can be automatically regulated.

5. Device according to one of the preceding claims, in which the regulating unit (117) has a switching element which is arranged in the second line (111) and by means of which, in an operating position, the supply of aerosol to the throttle element (117) can be interrupted.

6. Device according to Claim 5, in which the switching element is connected to the control unit and can be automatically opened and closed by the control unit depending on the aerosol user connected to the first line (105).

7. Device according to one of the preceding claims, in which a switching element, by means of which the flow path between the aerosol producer (101) and the aerosol user can be interrupted, is arranged in the first line (105) downstream of the junction with respect to the direction of flow of the aerosol.

8. Device according to one of the preceding claims, in which the aerosol producer (101) is connected to a storage container (119) for the liquid by the second line (111).

9. Device according to one of Claims 5 to 8, in which the switching element or the switching elements is or are designed as (a) valve(s).

10. Device according to one of the preceding claims, in which the junction (109) is designed as a Y component or T component.

11. Method for lubricating and/or cooling an aerosol user, in which an aerosol is produced from a liquid and a carrier gas and is supplied to the aerosol user, wherein, depending on the aerosol user connected, a portion of the aerosol is branched off and is conducted past the aerosol user, **characterized in that** the quantity of aerosol branched off is determined depending on the aerosol demand of the aerosol user.

12. Method according to Claim 11, in which aerosol is branched off in a quantity so as to ensure that the aerosol user is adequately supplied with aerosol.

## Revendications

1. Dispositif de lubrification et/ou de refroidissement de consommateurs d'aérosol, comprenant au moins un générateur d'aérosol (101) au moyen duquel un aérosol peut être généré à partir d'un liquide et d'un gaz porteur, le générateur d'aérosol (101) étant relié au consommateur d'aérosol au moyen d'une première conduite (105), un branchement (109) étant disposé dans la première conduite (105), au moyen duquel branchement le générateur d'aérosol est relié à une deuxième conduite (111), de sorte que l'aérosol puisse être guidé tant dans la première (105) que dans la deuxième conduite (111), **caractérisé en ce qu'**une unité de régulation (117) est prévue, au moyen de laquelle la quantité de l'aérosol guidé dans la deuxième conduite (111) peut être régulée, l'unité de régulation (117) étant réalisée de telle sorte que la régulation s'effectue en fonction des besoins en aérosol du consommateur d'aérosol.

2. Dispositif selon la revendication 1, dans lequel l'unité de régulation (117) est réalisée de telle sorte que la quantité d'aérosol déviée garantisse la production d'aérosol dans le générateur d'aérosol (101) en cas de faibles besoins du consommateur d'aérosol.

3. Dispositif selon la revendication 1 ou 2, dans lequel l'unité de régulation (117) comporte un élément d'étranglement (117) commandable disposé dans la deuxième conduite, au moyen duquel élément d'étranglement la quantité d'aérosol dévié dans la deuxième conduite (107) peut être régulée.

4. Dispositif selon la revendication 3, dans lequel l'élément d'étranglement (117) est relié à une unité de commande au moyen de laquelle la quantité de l'aérosol traversant la deuxième conduite (111) peut être régulée automatiquement en fonction du consommateur d'aérosol relié à la première conduite (105).

5. Dispositif selon l'une quelconque des revendications précédentes, dans lequel l'unité de régulation (117) comprend un élément de commutation disposé dans la deuxième conduite (111), au moyen duquel, dans une position de fonctionnement, l'acheminement d'aérosol jusqu'à l'élément d'étranglement (117) peut être interrompu.

6. Dispositif selon la revendication 5, dans lequel l'élément de commutation est relié à l'unité de commande, et peut être automatiquement ouvert ou fermé au moyen de l'unité de commande en fonction du consommateur d'aérosol relié à la première conduite (105).

7. Dispositif selon l'une quelconque des revendications précédentes, dans lequel un élément de commutation est disposé dans la première conduite (105) derrière le branchement par rapport au sens d'écoulement de l'aérosol, au moyen duquel élément de commutation la voie d'écoulement entre le générateur d'aérosol (101) et le consommateur d'aérosol peut être interrompue.

8. Dispositif selon l'une quelconque des revendications précédentes, dans lequel le générateur d'aérosol (101) est relié au moyen de la deuxième conduite (111) à un réservoir (119) pour le liquide.

9. Dispositif selon l'une quelconque des revendications 5 à 8, dans lequel l'élément de commutation ou les éléments de commutation sont réalisés en tant que vannes.

10. Dispositif selon l'une quelconque des revendications précédentes, dans lequel le branchement (109) est réalisé en tant que pièce en Y ou pièce en T.

11. Procédé de lubrification et/ou de refroidissement d'un consommateur d'aérosol, dans lequel un aérosol est généré à partir d'un liquide et d'un gaz porteur et est acheminé au consommateur d'aérosol, en fonction du consommateur d'aérosol raccordé, une partie de l'aérosol étant déviée et contournant le consommateur d'aérosol, **caractérisé en ce que** la quantité de l'aérosol dévié est déterminée en fonction des besoins en aérosol du consommateur d'aérosol.

12. Procédé selon la revendication 11, dans lequel une quantité suffisamment grande d'aérosol est déviée pour garantir une alimentation en aérosol suffisante du consommateur d'aérosol.
